# EUROPÄISCHE PATENTSCHRIFT

(11) **EP 1 477 536 B1**
(45) Veröffentlichungstag und Bekanntmachung des Hinweises auf die Patenterteilung: **21.12.2005**
(21) Anmeldenummer: 03011217.1
(22) Anmeldetag: 16.05.2003
(51) Int. Cl.: C09D 11/00, C09D 11/10

(54) **Pigmentpräparation**
Pigment composition
Composition au pigment

(43) Veröffentlichungstag der Anmeldung: 17.11.2004
(73) Patentinhaber: TETENAL AG & Co. KG., 22844 Norderstedt (DE)
(72) Erfinder: De Rossi, Umberto Dr., 22844 Norderstedt (DE); Bolender, Oliver Dr., 20255 Hamburg (DE); Domanski, Bärbel, 20099 Hamburg (DE)
(74) Vertreter: Glawe, Delfs, Moll

(56) Entgegenhaltungen:
- EP-A- 1 142 966
- WO-A-02/38688
- WO-A-02/46323
- WO-A-03/027162
- US-B1- 6 534 128
- US-B1- 6 558 753

## Beschreibung

Die Erfindung betrifft ein Verfahren zur Herstellung einer Ink-Jet Tinte.

Beim Ink-Jet Drucken werden kleine Tintentröpfchen aus einem Druckkopf auf ein zu bedruckendes Substrat ausgestoßen. Die Tinte kann entweder lösliche Farbstoffe oder Farbstoffpigmente enthalten. Farbstoffpigmente besitzen in aller Regel eine deutlich höhere Lichtechtheit als lösliche Farbstoffe. Farbstoffpigmente werden daher häufig bei der Herstellung strahlungshärtbarer Ink-Jet Tinten eingesetzt. Solche strahlungshärtbaren Tinten enthalten ungesättigte organische Verbindungen, die unter Einwirkung von Strahlung, insbesondere UV-Licht, polymerisieren. Diese Strahlungshärtung ist in der Regel schneller als eine Härtung durch Verdunsten von Lösemitteln. Strahlungshärtbare Tinten eignen sich daher auch zum Bedrucken von wenig oder nicht saugfähigen Substraten wie beispielsweise Kunststoffen.

Die Herstellung von Pigmenttinten ist aufwendig, da kommerziell erhältliche Farbstoffpigmente zunächst in einem geeigneten Lösemittel dispergiert und anschließend naß vermahlen werden müssen. Um die aufwendige Naßvermahlung zu vermeiden, sind bereits Pigmentpräparationen erhältlich, bei denen das Pigment in einem Polymer wie beispielsweise Polyvinylchlorid, Polyvinylbutyral oder Polyvinylalkohol dispergiert ist. Nachteilig daran ist, dass das Polymer die Viskosität der aus einer solchen Präparation angesetzten Tinte in unerwünschter Weise erhöht.

WO 02/38688 A2 offenbart eine strahlungshärtbare Ink-Jet Tinte, die als Inhaltsstoff unter anderem THFA enthalten kann. Zur Herstellung der Tinte wird die Pigmentpräparation vor dem Eindispergieren in die Tinte vermahlen.

Der Erfindung liegt die Aufgabe zugrunde, den Aufwand zur Herstellung einer Ink-Jet Tinte auf Pigmentbasis zu verringern.

Gegenstand der Erfindung ist ein Verfahren zur Herstellung einer Ink-Jet Tinte, wobei die Pigmentpräparation vor dem Eindispergieren in den Tintenansatz keiner Naßvermahlung unterzogen wird. THFA ist kommerziell beispielsweise von der Firma Cray Valley erhältlich. Die Erfindung hat erkannt, dass beim Ansetzen von Farbstoffpigmenten mit THFA als Bestandteil des Dispergermittels lediglich durch Eindispergieren des Pigments ein Pigmentkonzentrat entsteht, in dem das Farbstoffpigment mit der erforderlichen feinen Verteilung enthalten ist. Die im Stand der Technik erforderliche Naßvermahlung des Pigmentansatzes ist gemäß der vorliegenden Erfindung nicht erforderlich, auf diesen aufwendigen Verfahrensschritt kann verzichtet werden. Ein in THFA eindispergierte Pigmen kann sofort zum Ansatz einer Ink-Jet Tinte verwendet werden.

Eine Pigmentpräparation ist ein Dispergat eines oder mehrerer Farbstoffpigmente in einem Dispergiermittel, das erfindungsgemäß ohne weiteres, das heißt ohne weitere Maßnahmen zur Feinverteilung der Pigmente, zu einer Tinte angesetzt werden kann. Erfindungsgemäß enthält das Dispergiermittel der Pigmentpräparation THFA. Die fertige Pigmentpräparation enthält vorzugsweise 10-70, besonders bevorzugt 20-60 Gew.-% THFA.

Aus der Pigmentpräparation lässt sich erfindungsgemäß eine Ink-Jet Tinte, bevorzugt eine strahlungshärtende Tinte, ansetzen. Die Härtung einer solchen Tinte erfolgt bevorzugt durch UV-Licht.

Bei dem erfindungsgemäßen Verfahren ist ein Naßvermahlen der Pigmentpräparation vor dem Ansetzen der Tinte oder ein ähnlicher Schritt zur Verbesserung der Feinverteilung des Pigments in der Präparation nicht erforderlich.

Das Dispergiermittel der Pigmentpräparation kann außer THFA weitere Bestandteile, insbesondere polymerisierbare Monomere, enthalten. Ein bevorzugter weiterer Bestandteil ist 4-tert.-Butylcyclohexylacrylat (TBCH). TBCH ist nicht toxisch, geruchsarm und erlaubt stabile Tintenformulierungen.

Geeignete Farbstoffpigmente zur Herstellung einer erfindungsgemäßen Pigmentpräparation und Ink-Jet Tinte sind beispielsweise von den Firmen CIBA Specialty Chemicals (Mikrolith) und Clariant (Permajet) erhältlich. Beispielhaft genannt seien Mikrolith-K (Mikrolith Black C-K, Mikrolith Blue 4G-K, Mikrolith Gelb 4G-K, Mikrolith Gründ G-K, Mikrolith Magenta 174-K, Nujrikutg Nagebta 5B-K, Mikrolith Red 4C-K, Mikrolith DPP rot B-K, Mikrolith Scarlet R-K, Mikrolith Scharlach R-K, Mikrolith Violet B-K, Mikrolith Weiß R-K, Mikrolith Yellow 2R-K, Mikrolith Yellow 3G-K, Mikrolith Yellow 3R-K, Mikrolith Yellow 3R-T) sowie die Permajet-Reihe (Permajet Black R, Permajet Blue B2G, Permajet Red E5B, Permajet Yellow H4G, Permajet Yellow HR).

Die übrigen Bestandteile einer strahlungshärtbaren Ink-Jet Tinte sind dem Fachmann geläufig und beispielsweise in WO-A-02/061001, WO-A-99/29788 und EP-A-0882104 beschrieben.

Die Tinte enthält einen Fotoinitiator, der unter Einwirkung von Strahlung (insbesondere Ultraviolettlicht) freie Radikale erzeugt und somit die Polymerisation der Monomere oder etwaiger zusätzlicher Oligomere initiiert. Geeignete Fotoinitiatoren sind beispielsweise Benzophenon, 1-Hydroxycyclohexylphenylketon oder 2-Methyl-1-[4-(methylthio)phenyl]-2-morpholinopropan-1-on. Der Farbstoff in der erfindungsgemäßen Tinte kann ein löslicher Farbstoff sein, ist jedoch bevorzugt ein dispergierbares Pigment. Der Pigmentanteil der Tinte kann 0,5 bis 15 Gew.-%, bevorzugt 1 bis 5 Gew.-% betragen.

In der Tinte können zusätzliche Bestandteile enthalten sein, beispielsweise oberflächenaktive Stoffe, Entschäumer, Dispergiermittel, Synergisten für den Fotoinitiator, Stabilisatoren, Fließhilfsmittel, biozide Stoffe oder dergleichen.

Die Erfindung wird nachfolgend anhand von Beispielen erläutert.

### Beispiel 1

Ein Pigmentkonzentrat wird nach folgender Rezeptur angesetzt:

| Konzentratansatz (Dispergieransatz): | |
|---|---|
| TBCH | 444 g |
| THFA¹ | 222 g |
| Mikrolith Schwarz C-K² | 334 g |

| | |
|---|---|
| ¹ Tetrahydrofurfurylacrylat | |
| ² Farbstoffpigment, CIBA Specialty Chemicals | |

Das Pigmentkonzentrat wird mit weiteren Bestandteilen nach folgender Rezeptur zu einer Ink-Jet Tinte angesetzt:

| | |
|---|---|
| THFA | 18 g |
| TBCH | 460 g |
| TPGDA ³ | 141 g |
| Sartomer 492 ⁴ | 37 g |
| Craynor 386 ⁵ | 67 g |
| Laromer LR 899 ⁶ | 37 g |
| TEGO Glide 432 ⁷ | 30 g |
| Pigmentkonzentrat | 98 g |
| Irgacure 907 ⁸ | 47 g |
| Isopropylthioxanthon | 65 g |

| | |
|---|---|
| ³ Tripropylenglycoldiacrylat | |
| ⁴ Sartomer 492 ist ein von der Firma Cray Valley erhältliches mit 3Molpropoxyliertes Trimethylolpropantriacrylat | |
| ⁵ Aminsynergist, erhältlich von der Firma Cray Valley | |
| ⁶ aminmodifiziertes Acrylharz, erhältlich von der Firma BASF | |
| ⁷ Polyethersiloxancopolymer als Gleit- und Fließmittel, erhältlich von TEGO Chemie Service GmbH | |
| ⁸ Fotoinitiator 2-Methyl-1[4-(methylthio)phenyl]-2-morpholinopropan-1-on, erhältlich von CIBA Specialty Chemicals | |

Die so formulierte Tinte zeigt eine sehr gute Tropfenbildung beim Aufbringen mit einem Spectra-Druckkopf. Die Viskosität bei einer Jetting-Temperatur von 50°C betrug 13,6 mPas, die Oberflächenspannung der Tinte beträgt 25,5 mNm. Die Tinte ist bei Raumtemperatur sechs Monate ohne Sedimentation haltbar. Nach einer Lagerung von vierzehn Tagen bei 50°C betrug die Änderung der Viskosität weniger als 10 %. Die Tinte zeigt eine gute Haftung auf Vinyl- und Acrylplatten, gemessen durch den Fingernageltest und Gitterschnitttest (DIN EN ISO 2409). Beispiel 2

Ein Pigmentkonzentrat wird nach folgender Rezeptur angesetzt:

| Konzentratansatz (Dispergieransatz): | |
|---|---|
| TBCH | 149 g |
| THFA | 572 g |
| Permajet Blau B2-G⁹ | 279 g |

| | |
|---|---|
| ⁹ Farbstoffpigment, Fa. Clariant | |

Das Pigmentkonzentrat wird mit folgenden weiteren Bestandteilen zu einer Ink-Jet Tinte angesetzt:

| | |
|---|---|
| THFA | 3 g |
| TBCH | 483 g |
| TPGDA | 148 g |
| Sartomer 492 | 38 g |
| Craynor 386 | 69 g |
| Laromer LR 8996 | 38 g |
| TEGO Glide 432 | 29 g |
| Pigmentkonzentrat | 104 g |
| Irgacure 184¹⁰ | 39 g |
| Irgacure 907 | 39 g |
| Isopropylthioxanthon | 10 g |

| | |
|---|---|
| ¹⁰ Fotoinitiator 1-Hydroxycyclohexylphenylketon, erhältlich von CIBA Specialty Chemicals | |

Die so angesetzte Ink-Jet Tinte zeigte vergleichbare Eigenschaften wie die Tinte des Beispiels 1. Die Viskosität bei 50°C betrug 13,0 mPas, die Oberflächenspannung wie im Beispiel 1 25,5 mNm.

Bei den beiden Ausführungsbeispielen wird die Pigmentpräparation (Konzentratansatz bzw. Dispergieransatz) unmittelbar und ohne zwischengeschaltete weitere Dispergierschritte wie beispielsweise eine Naßvermahlung zu der Ink-Jet Tinte angesetzt.

## Patentansprüche

1. Verfahren zur Herstellung einer Ink-Jet Tinte, mit den Schritten:
a) Bereitstellen einer Pigmentpräparation, die THFA (Tetrahydrofurfuryl-acrylat) enthält
b) Eindispergieren der Pigmentpräparation in den Tintenansatz;
wobei die Pigmentpräparation vor dem Eindispergieren in den Tintenansatz keiner Naßvermahlung unterzogen wird.

2. Verfahren nach Anspruch 1, **dadurch gekennzeichnet, dass** die Pigmentpräparation 10 bis 70, vorzugsweise 20 bis 60 Gew.% THFA enthält.

3. Verfahren nach Anspruch 1 oder 2, **dadurch gekennzeichnet, dass** die Ink-Jet Tinte eine strahlungshärtende Tinte ist.

## Revendications

1. Procédé de fabrication d'une encre pour jet d'encre comportant les étapes qui consistent à :
a) fournir une composition de pigment contenant du THFA (acrylate de tétrahydrofurfuryl),
b) disperser la composition de pigment dans la charge d'encre,
la composition de pigment n'étant soumise à aucune mouture mouillée avant sa dispersion dans la charge d'encre.

2. Procédé selon la revendication 1, **caractérisé en ce que** la composition de pigment contient 10 à 70, de préférence 20 à 60 % de THFA.

3. Procédé selon les revendications 1 et 2, **caractérisé en ce que** l'encre pour jet d'encre est une encre durcissant sous un rayonnement.

## Claims

1. A method for the production of an inkjet ink comprising the steps:
a) provision of a pigment preparation which contains THFA (tetrahydrofurfuryl acrylate)
b) dispersion of the pigment preparation in the batch of ink,
the pigment preparation not being subjected to wet grinding prior to dispersion in the batch of ink.

2. A method according to claim 1, **characterised in that** the pigment preparation contains 10 to 70, preferably 20 to 60 wt.% THFA.

3. A method according to claim 1 or claim 2, **characterised in that** the inkjet ink is a radiation-curing ink.
